# EUROPEAN PATENT SPECIFICATION

(11) **EP 4 224 336 B1**
(45) Date of publication and mention of the grant of the patent: **30.09.2026**
(21) Application number: 22206367.9
(22) Date of filing: 09.11.2022
(51) Int. Cl.: G06F 16/245, G06F 16/2455

(54) **HYBRID DATABASE SCAN ACCELERATION SYSTEM**
HYBRIDES DATENBANK-SCAN-BESCHLEUNIGUNGSSYSTEM
SYSTÈME HYBRIDE D'ACCÉLÉRATION DE BALAYAGE DE BASE DE DONNÉES

(30) Priority: 02.02.2022 US 202263306090 P; 13.04.2022 US 202217720272
(43) Date of publication of application: 09.08.2023
(73) Proprietor: Samsung Electronics Co., Ltd., Gyeonggi-do 16677 (KR)
(72) Inventor: CHOI, Changho, San Jose, CA 95134 (US); KI, Yang Seok, San Jose, CA 95134 (US); KANG, Yangwook, San Jose, CA 95134 (US)
(74) Representative: Kuhnen & Wacker Patent- und Rechtsanwaltsbüro PartG mbB

(56) References cited:
- US-A1- 2019 228 009
- US-A1- 2020 301 898
- US-A1- 2021 397 567
- 24 September 2015, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, ISBN: 978-3-540-74549-5, XP047302969

## Description

### FIELD

The disclosure relates generally to databases, and more particularly to an accelerator to improve database query performance.

### BACKGROUND

Databases have grown significantly over time. Databases may potentially be terabytes in size. Performing queries on databases that are large may take relatively lengthy amounts of time

A need remains for a way to reduce the amount of time needed to perform a query on a database.

US 2019/228009 A1 discloses an information processing system and an information processing method. An accelerator is mounted on each server which is a worker node of a distributed DB system; a query generated by an application of an application server is divided into a first task that should be executed by the accelerator and a second task that should be executed by software and is allocated to the server of the distributed DB system; the server causes the accelerator to execute the first task, and executes the second task based on the software. US 2018/150330 A1 discloses a compute device that has a compute engine that receives a workload processing request defined by at least one request parameter and determines at least one accelerator device capable of processing a workload in accordance with the at least one request parameter. The compute engine transmits a workload to the at least one accelerator device, receives a work product produced by the at least one accelerator device from the workload, and provides the work product to an application. US 2010/005077 A1 discloses generating and optimizing query plans that are at least partially executable in hardware. Upon receiving a query, the query is rewritten and optimized with a bias for hardware execution of fragments of the query. A template-based algorithm may be employed for transforming a query into fragments and then into query tasks. The various query tasks can then be routed to either a hardware accelerator, a software module, or sent back to a database management system for execution. For those tasks routed to the hardware accelerator, the query tasks are compiled into machine code database instructions. In order to optimize query execution, query tasks may be broken into subtasks, rearranged based on available resources of the hardware, pipelined, or branched conditionally

### SUMMARY

Embodiments of the invention are defined in the appended claims.

### BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale.
FIG. 1 shows a machine configured to use an accelerator to support hybrid database query processing, according to embodiments of the disclosure.
FIG. 2 shows details of the machine of FIG. 1, according to embodiments of the disclosure.
FIG. 3 shows details of the accelerator of FIG. 1, according to embodiments of the disclosure.
FIG. 4 shows details of the storage device of FIG. 1, according to embodiments of the disclosure.
FIG. 5 shows an example query being processed using the hardware of FIG. 3 or the software of FIG. 3 in the accelerator of FIG. 1, according to embodiments of the disclosure.
FIG. 6A shows an example query being processed using both the hardware of FIG. 3 and the software of FIG. 3 in the accelerator of FIG. 1, according to embodiments of the disclosure.
FIG. 6B continues the example query of FIG. 6A being processed using both the hardware of FIG. 3 and the software of FIG. 3 in the accelerator of FIG. 1, according to embodiments of the disclosure.
FIG. 7 shows a flowchart of an example procedure for processing the query of FIG. 5 using the accelerator of FIG. 1, according to embodiments of the disclosure.
FIG. 8 shows a flowchart of an example procedure for accessing a database from the storage device of FIG. 1, according to embodiments of the disclosure.
FIG. 9 shows a flowchart of an example procedure for the coordinator of FIG. 3 to identify an element of the accelerator of FIG. 1 to process the query of FIG. 5, according to embodiments of the disclosure.
FIG. 10 shows a flowchart of an example procedure for processing the query of FIG. 5 using both the hardware of FIG. 3 and the software of FIG. 3 in the accelerator of FIG. 1, according to embodiments of the disclosure.
FIG. 11 shows a flowchart of an example procedure for the coordinator of FIG. 3 to query the hardware of FIG. 3 for its capabilities, according to embodiments of the disclosure.

### DETAILED DESCRIPTION

Reference will now be made in detail to embodiments of the disclosure, examples of which are illustrated in the accompanying drawings. In the following detailed description, numerous specific details are set forth to enable a thorough understanding of the disclosure. It should be understood, however, that persons having ordinary skill in the art may practice the disclosure without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first module could be termed a second module, and, similarly, a second module could be termed a first module, without departing from the scope of the disclosure.

The terminology used in the description of the disclosure herein is for the purpose of describing particular embodiments only and is not intended to be limiting of the disclosure. As used in the description of the disclosure and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The components and features of the drawings are not necessarily drawn to scale.

Databases have grown over time. Some databases may be terabytes in size. Processing a query on a database may involve identifying rows in a table that meet a search criteria, which may involve comparing data from each row in the table with the search criteria.

Queries may be processed in hardware or in software. Hardware may be designed to process queries efficiently. But while it may be possible to design a hardware that may process a query efficiently given the design of a particular database, it is more difficult to design a hardware that may process a query efficiently for any database. While some data types-integers, floating point numbers, characters, etc.-might have a fixed or bounded size, other data types might be essentially unbounded in size. For example, a string is a sequence of characters, and the size of a string may vary with the number of characters in the string. Even if individual databases might set bounds on the length a string may take in that database, different databases might have different bounds. Further, some databases might use strings that do not have any bound on their length. For example, strings in the C programming language are unbounded in length: the program knows where the string is terminated by seeing a special symbol (a null character) that represents the end of the string. A database that uses null-terminated strings rather than bounding the length of a string at a certain number of characters could theoretically store strings of any particular length, without bound.

The larger the size of a particular data in the database, the greater the number of resources the hardware may need to be able to process a query involving that data. For example, if integers are stored using two bytes of data, the hardware may need to be able to compare 16 bits of data. For a string that is up to 8 characters in length, if each character uses one byte of data, the hardware may need to be able to compare 64 bits of data. More generally, for strings of length n, where each character is stored using one byte of data, the hardware may need to be able to compare up to 8n bits of data. To be able to process a query on such strings, the hardware may therefore need to be able to process a large number of bits of data, each bit involving some circuitry.

On the other hand, processing queries in software may support processing data of any data type or data size. Software may use loops to compare data, regardless of the length of the data. But processing queries in software may not be as efficient as processing queries in hardware, and therefore may take longer.

Embodiments of the disclosure may leverage the benefits of both hardware and software query processing. A controller may determine if a hardware may be able to process a query, in whole or in part. If the hardware is not able to process the query, then the controller may pass the query to the software. Otherwise, the hardware may process the query using the resources available to the hardware. The controller may then pass the results to the software to complete the query processing. The controller may determine whether the hardware was able to completely process the query: if not, then the controller may pass the results to the software for further processing.

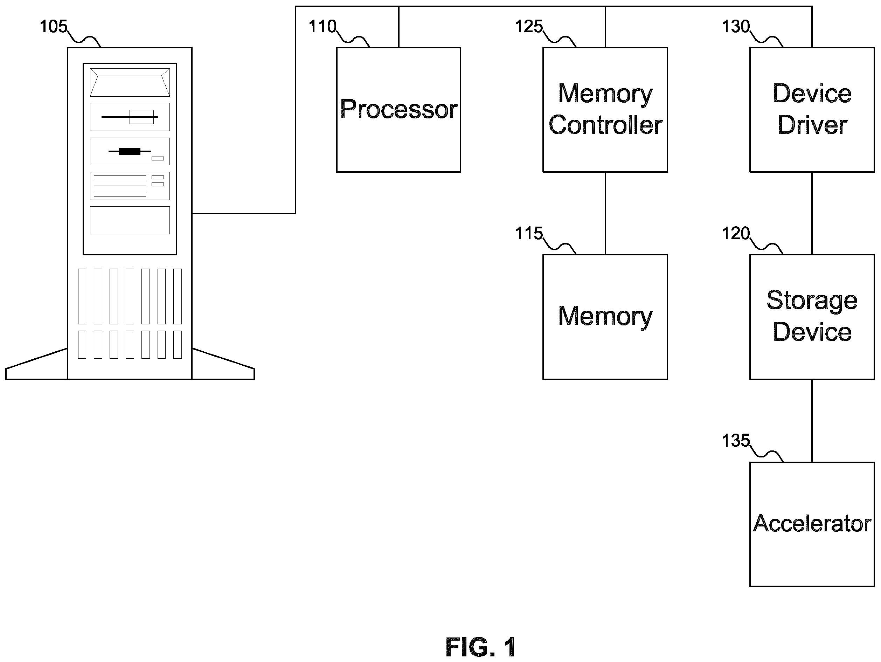

FIG. 1 shows a machine configured to use an accelerator to support hybrid database query processing, according to embodiments of the disclosure. In FIG. 1, machine 105, which may also be termed a host or a system, may include processor 110, memory 115, and storage device 120. Processor 110 may be any variety of processor. Processor 110, along with the other components discussed below, are shown outside the machine for ease of illustration. However, alternatively any embodiment of the disclosure may include these components within the machine. While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM) etc. Memory 115 may be a volatile or non-volatile memory, as desired. Memory 115 may also be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may also support an operating system under which various applications may be running. These applications may issue requests (which may also be termed commands) to read data from or write data to either memory 115. When storage device 120 is used to support applications reading or writing data via some sort of file system, storage device 120 may be accessed using device driver 130. While FIG. 1 shows one storage device 120, there may be any number (one or more) of storage devices in machine 105. Storage device 120 may each support any desired protocol or protocols, including, for example, the Non-Volatile Memory Express (NVMe) protocol. Different storage devices 120 may support different protocols and/or interfaces.

While FIG. 1 uses the generic term "storage device", embodiments of the disclosure may include any storage device formats that may benefit from the use of computational storage units, examples of which may include hard disk drives and Solid State Drives (SSDs). Any reference to "SSD" below should be understood to include such other embodiments of the disclosure. Further, different types of storage devices may be mixed. For example, one storage device 120 might be a hard disk drive, and another storage device 120 might be an SSD.

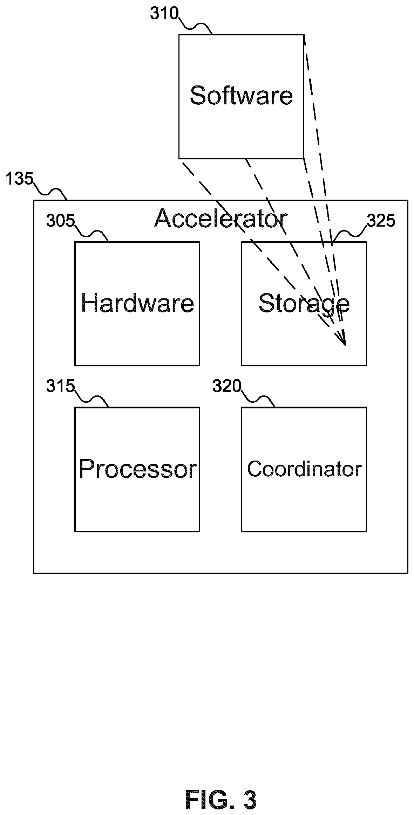

Machine 105 may also include accelerator 135. Accelerator 135 may be a form of local processing "nearer" to storage device 120 that may be used to support processing queries on a database, which might be stored on storage device 120. By using accelerator 135, queries might be processed more quickly than by processor 110, and the load on processor 110 may be reduced. Accelerator 135 is discussed further with reference to FIG. 3 below.

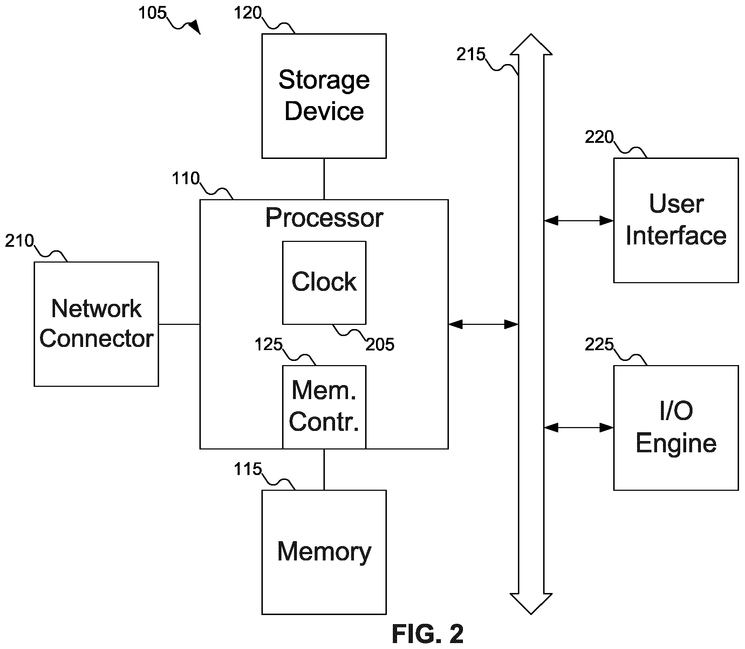

FIG. 2 shows details of the machine of FIG. 1, according to embodiments of the disclosure. In FIG. 2, typically, machine 105 includes one or more processors 110, which may include memory controllers 120 and clocks 205, which may be used to coordinate the operations of the components of the machine. Processors 110 may also be coupled to memories 115, which may include random access memory (RAM), read-only memory (ROM), or other state preserving media, as examples. Processors 110 may also be coupled to storage devices 125, and to network connector 210, which may be, for example, an Ethernet connector or a wireless connector. Processors 110 may also be connected to buses 215, to which may be attached user interfaces 220 and Input/Output (I/O) interface ports that may be managed using I/O engines 225, among other components.

FIG. 3 shows details of accelerator 135 of FIG. 1, according to embodiments of the disclosure. In FIG. 3, accelerator 135 of FIG. 1 is shown. Accelerator 135 includes hardware 305, software 310, processor 315, and coordinator 320. Hardware 305 may be a circuit or other hardware that may be designed to process queries (or some queries) on a database. For example, hardware 305 may include a central processing unit (CPU) or some other processor (such as a field programmable gate array (FPGA), an application-specific integrated circuit (ASIC), or a system-on-a-chip (SoC)), a graphics processing unit (GPU), a general purpose GPU (GPGPU), a data processing unit (DPU), a neural processing unit (NPU), a network interface card (NIC), or a tensor processing unit (TPU), among other possibilities.

While hardware 305 may be capable of processing some queries on a database, hardware 305 might not be capable of processing every possible query. For example, a database storing strings might support strings of up to length, say, 20 characters. But hardware 305 might only support searching strings of up to length, say, 8 characters. In that case, hardware 305 might not be able to process a query that involves strings in the database: at least, hardware 305 might not be able to fully process a query that involves strings in the database.

For queries that may not be processed (fully or partially) by hardware 305, accelerator 135 may include software 310. Software 310, which may be stored in storage 325, which may be, among other possibilities, a non-volatile storage such as flash memory or a read-only memory (ROM) such as a ROM, a programmable ROM (PROM), an erasable PROM (EPROM), an electrically erasable PROM (EEPROM), or the like. Software 310 may be executed on a processor, such as processor 315: processor 315 may be any desired type of processor, such as a CPU, a FPGA, an ASIC, a GPU, a GPGPU, a DPU, an NPU, a TPU, or the like. Software 310 may be capable of processing any query on the database, without concern for resource limits such as hardware 305 may have as discussed above. But because software 310 may execute on a more general purpose processor than the hardware used by hardware 305, software 310 might take longer to process a query than hardware 305 might take.

To manage whether hardware 305, software 310, or both are used in processing a query, coordinator 320 is used. Coordinator 320 examines the query and determines whether it lies fully or partially within the capabilities of hardware 305. If so, then coordinator 320 instructs hardware 305 to process the query; otherwise, coordinator 320 instructs software 310 to process the query. Note that if hardware 305 is partially capable of processing the query, then coordinator 320 instructs hardware 305 to process the query to the extent possible, and then instructs software 310 to finish processing the query on the results produced by hardware 305.

As coordinator 320 compares a query with the capabilities of hardware 305, coordinator 320 determines the capabilities of hardware 305. Coordinator 320 determines the capabilities of hardware 305 by sending, a message asking for the capabilities of hardware 305. These capabilities includes the size of various types of fields that hardware 305 may be capable of processing (such as the width of strings, or the size of integers, floating point values, or other numbers). Upon receiving a message from coordinator 320, hardware 305 responds with the various capabilities. Thus armed, coordinator 320 is then able to determine what queries hardware 305 is capable of processing and what queries might involve software 310 (in part or wholly).

While FIG. 3 shows processor 315 and coordinator 320 as separate elements, embodiments of the disclosure may combine these elements. For example, in some embodiments of the disclosure, coordinator 320 might be a separate circuit responsible directing queries to hardware 305 and/or software 310; in other embodiments of the disclosure, coordinator 320 might be software running on processor 315 (or within a core of processor 315) and may share processing cycles with software 310 as needed for processing queries.

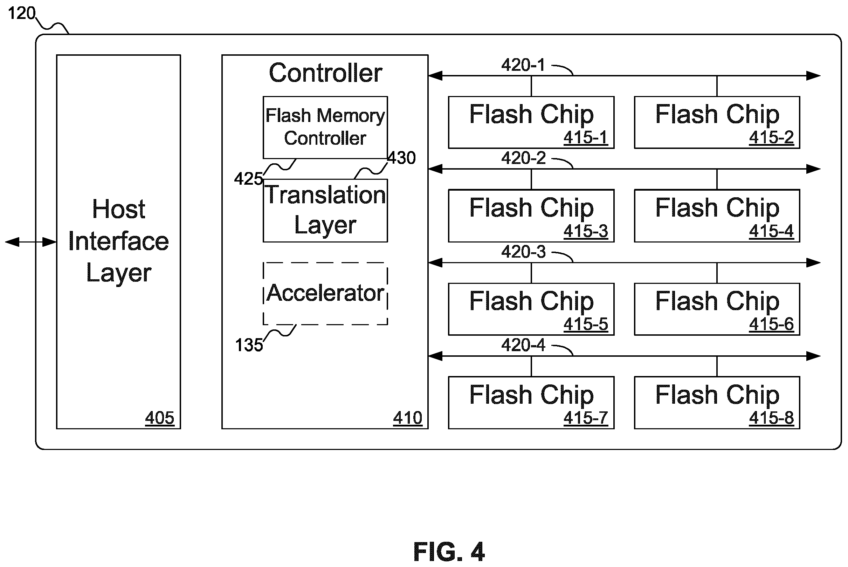

FIG. 4 shows details of storage device 120 of FIG. 1, according to embodiments of the disclosure. In FIG. 4, the implementation of storage device 120 is shown as for a Solid State Drive. In FIG. 4, storage device 120 may include host interface layer (HIL) 405, controller 410, and various flash memory chips 415-1 through 415-8 (also termed "flash memory storage", and which may be referred to collectively as flash memory chips 415), which may be organized into various channels 420-1 through 420-4 (which may be referred to collectively as channels 420). Host interface layer 405 may manage communications between storage device 120 and other components (such as processor 110 of FIG. 1). Host interface layer 405 may also manage communications with devices remote from storage device 120. That is, host interface layer 405 may manage communications with devices other than processor 110 of FIG. 1 (for example, accelerator 135 of FIG. 1, if not included as part of storage device 120), and which may be local to or remote from machine 105 of FIG. 1: for example, over one or more network connections. These communications may include read requests to read data from storage device 120, write requests to write data to storage device 120, and delete requests to delete data from storage device 120.

Host interface layer 405 may manage an interface across only a single port, or it may manage interfaces across multiple ports. Alternatively, storage device 120 may include multiple ports, each of which may have a separate host interface layer 405 to manage interfaces across that port. Embodiments of the inventive concept may also mix the possibilities (for example, an SSD with three ports might have one host interface layer to manage one port and a second host interface layer to manage the other two ports).

Controller 410 may manage the read and write operations, along with garbage collection and other operations, on flash memory chips 415 using flash memory controller 425. Controller 410 may also include translation layer 430 which may manage the mapping of logical addresses (such as logical block addresses (LBAs)) as used by host 105 of FIG. 1 to physical addresses (such as physical block addresses (PBAs)) where the data is actually stored on storage device 120. By using translation layer 430, host 105 of FIG. 1 does not need to be informed when data is moved from one physical address to another within storage device 120.

In some embodiments of the disclosure, controller 410 may include accelerator 135. Accelerator 135 may be omitted from storage device 120 (or perhaps more accurately, may be external to controller 410 or storage device 120), which is represented by the dashed lines around accelerator 135.

While FIG. 4 shows storage device 120 as including eight flash memory chips 415 organized into four channels 420, embodiments of the inventive concept may support any number of flash memory chips organized into any number of channels. Similarly, while FIG. 4 shows the structure of a SSD, other storage devices (for example, hard disk drives) may be implemented using a different structure from that shown in FIG. 4 to manage reading and writing data, but with similar potential benefits.

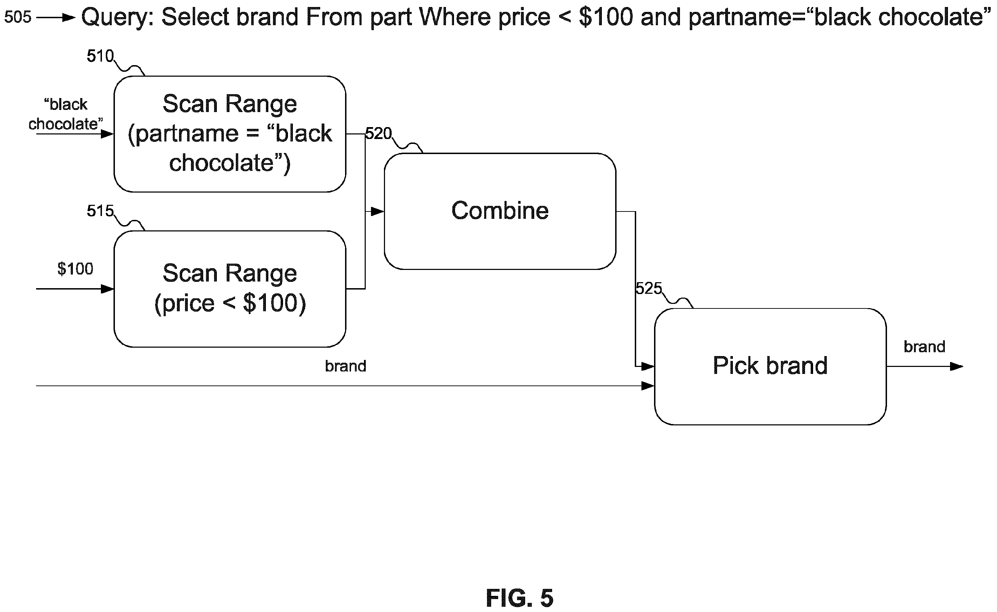

FIG. 5 shows an example query being processed using hardware 305 of FIG. 3 or software 310 of FIG. 3 in accelerator 135 of FIG. 1, according to embodiments of the disclosure. In FIG. 5, query 505 is shown. Query 505 may represent, for example, a query of all brands in a parts table where the part name is "black chocolate" and the price of the part is less than $100. For purposes of illustration in FIG. 5, it may be assumed that hardware 305 of FIG. 3 is configured to process strings of lengths up to the longest string in the database to which query 505 is applied. Thus, hardware 305 of FIG. 3 may be capable of comparing the part name "black chocolate" with every part name in the parts table in the database to determine if the part name in the parts table exactly matches "black chocolate". Knowing this, coordinator 320 of FIG. 3 may identify hardware 305 of FIG. 3 as capable of processing query 505.

At operation 510, hardware 305 of FIG. 3 may compare the part name "black chocolate" with the part names in the parts table to identify what rows include parts named "black chocolate". At operation 515, hardware 305 of FIG. 3 may compare the price in the parts table with the amount $100 to identify what rows include parts that have a price less than $100. At operation 520, hardware 305 of FIG. 3 may combine the two results of operations 510 and 515 to identify the rows that include parts named "black chocolate" and that cost less than $100. Finally, at operation 525, hardware 305 of FIG. 3 may extract the brand from the rows identified at operation 520.

While FIG. 5 is described in terms of hardware 305 of FIG. 3 as processing query 505, embodiments of the disclosure may include software 310 of FIG. 3 processing query 505 in the same manner shown in FIG. 5. Thus, if coordinator 320 of FIG. 3 identifies software 310 of FIG. 3 to process query 505, software 310 of FIG. 3 may use a process similar to that shown in FIG. 5.

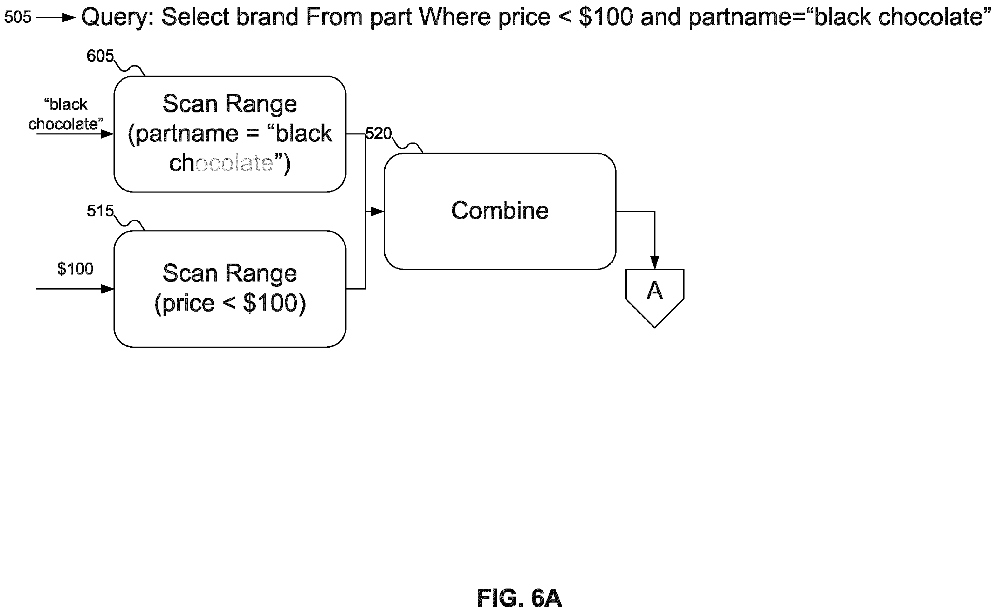

FIG. 6A shows an example query being processed using both hardware 305 of FIG. 3 and software 310 of FIG. 3 in accelerator 135 of FIG. 1, according to embodiments of the disclosure. In FIG. 6A, query 505 is the same as query 505 of FIG. 5. But for purposes of illustration in FIG. 6A, it is assumed that hardware 305 of FIG. 3 is configured to process strings of lengths of up to eight characters, which is not long enough to completely process the part name in query 505. Knowing this, coordinator 320 of FIG. 3 identifies hardware 305 of FIG. 3 as partially capable of processing query 505, and identifies software 310 of FIG. 3 as capable of completing the processing of query 505.

Instead of comparing the entire part name with the part names in entries in the parts table, at operation 605 hardware 305 of FIG. 3 compares the first eight characters of the part name ("black ch": a space is a character). At operation 515 (the same as operation 515 of FIG. 5), hardware 305 of FIG. 3 compares the price in the parts table with the amount $100 to identify what rows include parts that have a price less than $100. At operation 520 (the same as operation 520 of FIG. 5), hardware 305 of FIG. 3 combines the two results of operations 510 and 515 to identify the rows that include parts named "black ch" and that cost less than $100.

But note that "black ch" might match part names other than "black chocolate". For example, if only first eight characters of part names are compared, then "black ch" might also match "black chiffon" or "black chartreuse" or "black chalice". This means that hardware 305 of FIG. 3 returns some false positive results: that is, hardware 305 of FIG. 3 returns might matches that look correct based on the capabilities of hardware 305 of FIG. 3, but are not actually correct matches.

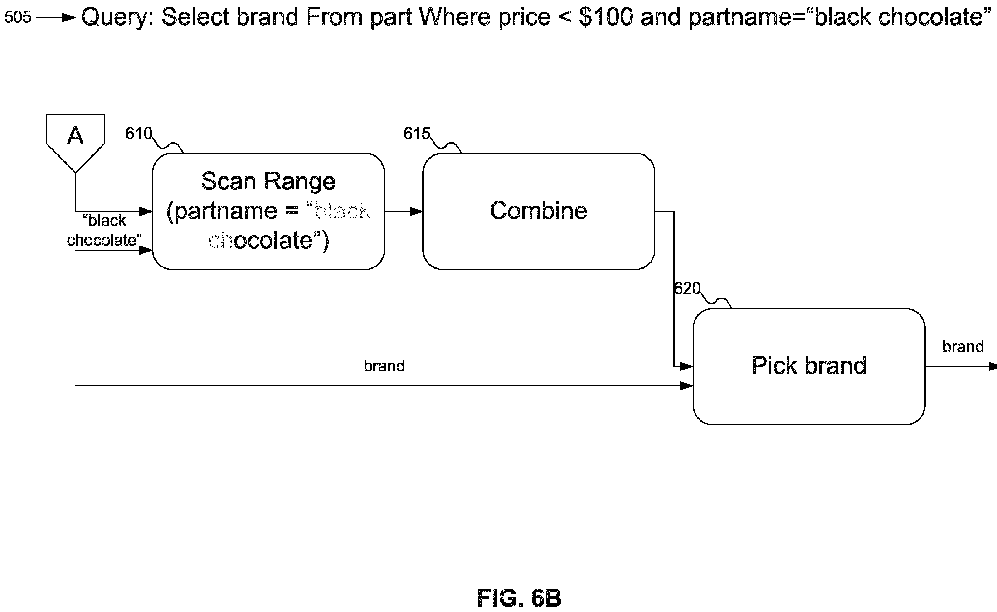

Once hardware 305 of FIG. 3 has produced its partial result, coordinator 320 of FIG. 3 identifies software 310 of FIG. 3 to finish processing query 505. As shown in FIG. 6B, at operation 610 software 310 of FIG. 3 compares the remainder of the part name (other than the first eight characters) in query 505 with the tail of the part names in the parts table. Note that since hardware 305 of FIG. 3 has identified all entries in the parts table of the database that begin with "black ch", software 310 ignores the first eight characters in the partial results: all entries in the partial results are expected to have part names that begin with "black ch". Coordinator 320 of FIG. 3 informs software 310 of FIG. 3 of the number of characters hardware 305 of FIG. 3 was capable of processing, so that software 310 of FIG. 3 knows what offset to use in comparing the tail of the part names. At operation 615, software 310 of FIG. 3 combines the results of its filter with the partial results from hardware 305 of FIG. 3. Finally, once the entries in the parts table have been identified, at operation 620, software 310 of FIG. 3 may select the brand names from the entries in the parts table that have been identified.

In FIGs. 5 and 6A-6B, coordinator 320 of FIG. 3 determined that hardware 305 of FIG. 3 was capable of producing the results or at least producing partial results. In some embodiments of the disclosure, hardware 305 of FIG. 3 may be used to produce the results. In some embodiments of the disclosure, hardware 305 of FIG. 3 may be used to produce partial results, and software 310 of FIG. 3 may refine the partial results to produce the final results of query 505.

But in some embodiments of the disclosure, software 310 of FIG. 3 might be used only to refine the results of hardware 305 of FIG. 3. That is, if hardware 305 of FIG. 3 mistakenly omits a valid entry (a false negative result), software 310 of FIG. 3 might not be able to correct for that situation. This situation might arise because software 310 of FIG. 3, which might be slower than hardware 305 of FIG. 3 in processing query 505, might not revisit the table in the database for entries that hardware 305 of FIG. 3 might have missed. Put another way, if hardware 310 of FIG. 3 might miss entries due to false negative results, software 310 of FIG. 3 might not be able to compensate, and the results of query 505 might be incomplete.

False negative results might occur where hardware 305 of FIG. 3 thinks a match does not exist when it actually does exist. For example, if the query involves identifying comparators such as "not equal", "not like", or "not in" (equivalently, "not a substring of"), hardware 305 of FIG. 3, when comparing only part of the string might return a false negative. As a particular example, consider a query for parts names that are not equal to "black chocolate". If hardware 305 of FIG. 3 is only capable of comparing the first eight characters of a string, hardware 305 of FIG. 3 might determine that an entry that contains the part name "black chiffon" is a match for "black chocolate" (again, looking at only the first eight characters), and might omit that entry as a possible result. But since "black chiffon" is actually different from "black chocolate", the part name "black chiffon" should have been included in the results, and hardware 305 of FIG. 3 might return a false negative result.

In situations where a false negative result might occur, coordinator 320 FIG. 3 might send query 505 to software 310 of FIG. 3 for processing, without involving hardware 305 of FIG. 3. In this way, software 310 of FIG. 3 may consider all entries in the table in the database, rather than just considering the entries filtered by hardware 305 of FIG. 3. Note that this result may be functionally equivalent to having software 310 of FIG. 3 check the database for false negative results of hardware 305 of FIG. 3 processing the query. But as the latter process would mean that both hardware 305 of FIG. 3 and software 310 of FIG. 3 might consider process the query against all entries in the database, the results of hardware 305 of FIG. 3 might be wasted, which would mean that the overall processing of the query might take longer when using both hardware 305 of FIG. 3 and software 310 of FIG. 3 (as compared with using just software 310 of FIG. 3 to process the query).

Connections between components and/or equipment in FIGs. 1-6B, or between equipment shown in FIGs. 1-6B and other equipment, may be implemented with one or more interconnects, one or more networks, a network of networks (e.g., the internet), and/or the like, or a combination thereof, using any type of interface and/or protocol. For example, connections may be implemented with Peripheral Component Interconnect Express (PCIe), NVMe, NVMe Over Fabric (NVMe-oF), Ethernet, Transmission Control Protocol/Internet Protocol (TCP/IP), Direct Memory Access (DMA), Remote DMA (RDMA), RDMA over Converged Ethernet (ROCE), FibreChannel, InfiniBand, Serial ATA (SATA), Small Computer Systems Interface (SCSI), Serial Attached SCSI (SAS), iWARP, and/or the like, or any combination thereof.

For example, in some embodiments of the disclosure, connections may be implemented with an NVMe protocol operating over a PCIe interconnect. As another example, in some embodiments of the disclosure, connections may be implemented with an NVMe-oF protocol operating over an Ethernet connection. In such embodiments of the disclosure, and depending on the implementation details, the NVMe protocol may provide a mechanism for passing commands, data, and/or the like to and/or from a kernel that may be efficient, effective, convenient, standardized, flexible, and/or the like. However, in other embodiments of the disclosure, any other types of interfaces, protocols, and/or the like may be used.

In some embodiments of the disclosure, connections may implement a coherent (e.g., memory coherent, cache coherent, and/or the like) or memory semantic interface such as Compute Express Link (CXL), and/or a coherent protocol such as CXL.mem, CXL.cache, and/or CXL.IO. Other examples of coherent and/or memory semantic interfaces and/or protocols that may be used may include Gen-Z, Coherent Accelerator Processor Interface (CAPI), Cache Coherent Interconnect for Accelerators (CCIX), and/or the like.

Accelerator 135 of FIG. 1 may be implemented with any type of device that may include an accelerator. For example, accelerator 135 of FIG. 1 may be implemented with a storage device, a GPU, a NIC, and/or the like, or a combination thereof. In some embodiments of the disclosure, accelerator 135 of FIG. 1 may include one or more additional components related to a functionality of the device. For example, accelerator 135 of FIG. 1 may include a storage media and/or a media translation layer (e.g., a flash translation layer (FTL)) if implemented using a storage device, a network interface and/or a modem if implemented using a NIC, a graphics pipeline if implemented using a GPU, and/or the like.

In embodiments of the disclosure in which accelerator 135 of FIG. 1 is implemented using a storage device, the storage device may include any type of nonvolatile storage media based, for example, on solid state media *(e.g.,* an SSD), magnetic media (e.g., a hard disk drive (HDD)), optical media, and/or the like. For example, in some embodiments of the disclosure, a storage device may be implemented as an SSD based on not-AND (NAND) flash memory, persistent memory such as cross-gridded nonvolatile memory, memory with bulk resistance change, phase change memory (PCM), and/or the like, or any combination thereof.

In embodiments of the disclosure in which accelerator 135 of FIG. 1 is implemented using a storage device, the storage device may be implemented in any form factor such as 3.5 inch, 2.5 inch, 1.8 inch, M.2, Enterprise and Data Center SSD Form Factor (EDSFF), NF1, and/or the like, using any connector configuration such as SATA, SCSI, SAS, U.2, and/or the like. Any such storage devices may be implemented entirely or partially with, and/or used in connection with, a server chassis, server rack, dataroom, datacenter, edge datacenter, mobile edge datacenter, and/or any combinations thereof.

Accelerator 135 of FIG. 1 may include one or more computational resources that may run an operating system and/or a kernel and/or that may perform any type of processing that may be controlled, initiated, offloaded, handed off, assigned, and/or the like, by the operating system and/or kernel. For example, in addition to running the operating system and/or kernel, accelerator 135 of FIG. 1 may run one or more programs (e.g., downloaded user programs) in a user space of the operating system.

Accelerator 135 of FIG. 1 may include, for example, one or more compute engines such as one or more processors (e.g., CPUs such as complex instruction set computer (CISC) processors such as x86 processors and/or reduced instruction set computer (RISC) processors such as ARM processors), ASICs, FPGAs, GPUs, NPUs, TPUs, and/or the like. Moreover, in some embodiments of the disclosure, accelerator 135 of FIG. 1 may have one or more subcomponents such as processor cores, ASIC submodules, and/or the like.

Although shown as a single component, accelerator 135 of FIG. 1 may be distributed partially or entirely, as one or more separate components, and/or between one or more other components such as a command logic, a device controller, and/or the like.

The operating system may be implemented with any operating system including Linux, Android, Tizen, embedded Windows, and/or the like.

A programming interface may be implemented, for example, with program code that may be built into a kernel (e.g., compiled into the kernel), inserted into the kernel as a module, and/or the like.

A command logic may be implemented, for example, as a separate component, as part of a device controller (e.g., a storage device controller), as part of accelerator 135 of FIG. 1, or in any other manner or combination thereof. For example, in an embodiment of the disclosure, a command logic may be implemented at least partially as part of a device controller, the command logic may be implemented at least partially with firmware (FW) that may be run by the device controller. As another example, in some embodiments of the disclosure, a command logic may be implemented at least partially as a device driver in a kernel of an operating system running, for example, on one or more compute resources of accelerator 135 of FIG. 1.

A command logic, and any other functionality disclosed herein, may be implemented with hardware, software, firmware, or any combination thereof including combinational logic, sequential logic, one or more timers, counters, registers, and/or state machines, one or more complex programmable logic devices (CPLDs), FPGAs, ASICs, CPUs, GPUs, NPUs, TPUs, and/or the like, executing instructions stored in any type of memory, or any combination thereof. In some embodiments of the disclosure, one or more components, including a command logic, may be implemented as a system-on-chip (SOC).

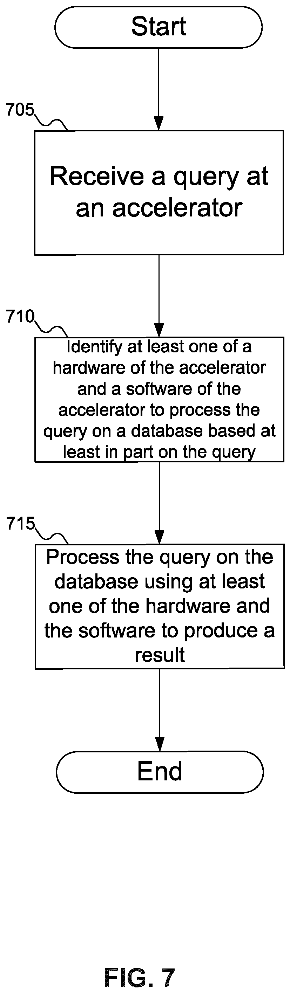

FIG. 7 shows a flowchart a procedure for processing query 505 of FIG. 5 using accelerator 135 of FIG. 1, according to embodiments of the disclosure. In FIG. 7, at block 705, accelerator 135 of FIG. 1 receives query 505 of FIG. 5. At block 710, coordinator 320 of FIG. 3 identifies hardware 305 of FIG. 3 or software 310 of FIG. 3 (or both) to process query 505 of FIG. 5. Finally, at block 715, hardware 305 of FIG. 3, software 310 of FIG. 3, or both process query 505 of FIG. 5.

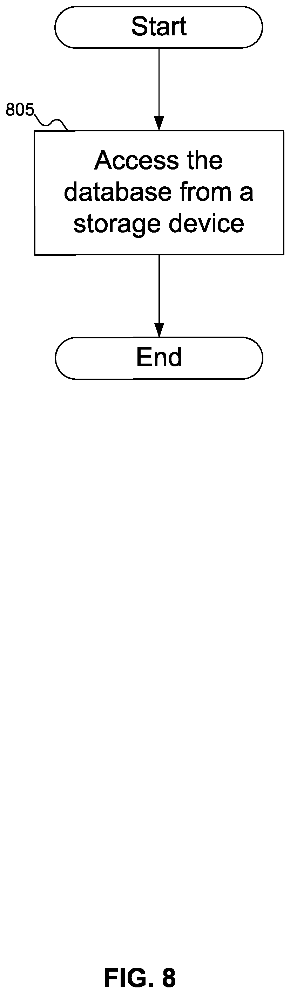

FIG. 8 shows a flowchart of an example procedure for accessing a database from storage device 120 of FIG. 1, according to embodiments of the disclosure. In FIG. 8, at block 805, accelerator 135 of FIG. 1 may access the database from storage device 120 of FIG. 1. Accelerator 135 of FIG. 1 may then use the data from the database in processing query 505 of FIG. 5.

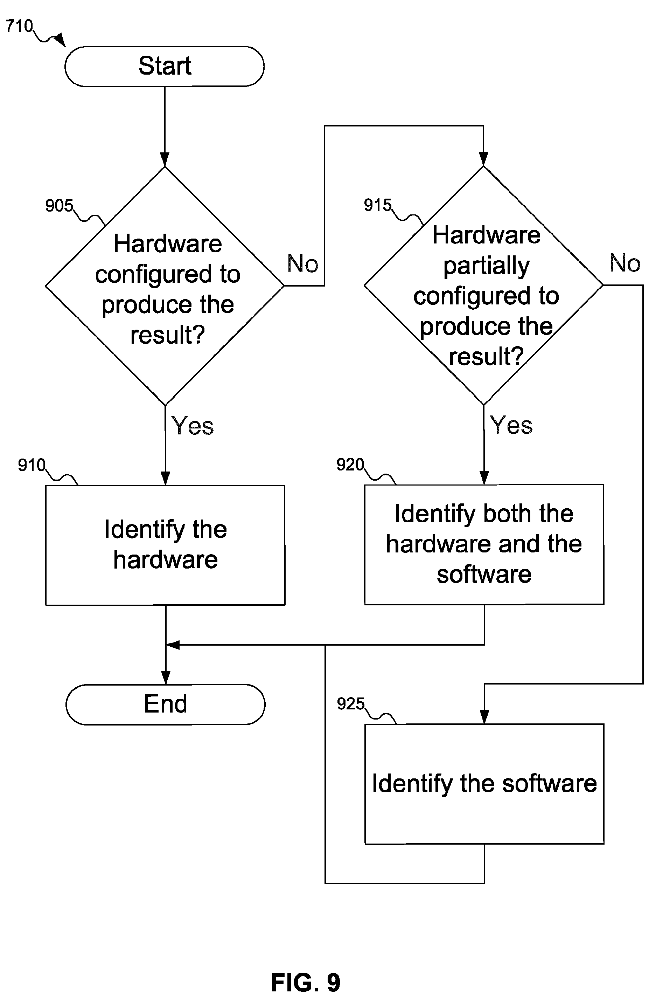

FIG. 9 shows a flowchart of an example procedure for coordinator 320 of FIG. 3 to identify an element of accelerator 135 of FIG. 1 to process query 505 of FIG. 5, according to embodiments of the disclosure. In FIG. 9, at block 905, coordinator 320 of FIG. 3 may determine whether hardware 305 of FIG. 3 is configured to produce a result of query 505 of FIG. 5. This determination may involve, for example, determining whether hardware 305 of FIG. 3 includes sufficient resources to fully process query 505 of FIG. 5, without concern for false negative results or false positive results. If so, then at block 910 coordinator 320 of FIG. 3 may identify hardware 305 of FIG. 3 for processing query 505 of FIG. 5, so that at block 715 of FIG. 7 query 505 of FIG. 5 may be processed by hardware 305 of FIG. 3.

If hardware 305 of FIG. 3 does not include sufficient resources to fully process query 505 of FIG. 5, then at block 915 coordinator 320 of FIG. 3 may determine whether hardware 305 of FIG. 3 includes sufficient resources to partially process query 505 of FIG. 5. This determination may involve, for example, determining whether hardware 305 of FIG. 3 includes sufficient resources to avoid false negative results. If so, then at block 920 coordinator 320 of FIG. 3 may identify both hardware 305 of FIG. 3 and software 310 of FIG. 3 for processing query 505 of FIG. 5: hardware 305 of FIG. 3 may produce a partial result, and software 310 of FIG. 3 may refine that partial result to produce a final result of query 505 of FIG. 5. In this manner, at block 715 of FIG. 7 query 505 of FIG. 5 may be processed by both hardware 305 of FIG. 3 and software 310 of FIG. 3.

If hardware 305 of FIG. 3 does not include sufficient resources to partially process query 505 of FIG. 5-for example, if hardware 305 of FIG. 3 might produce a false negative result for query 505 of FIG. 5-then at block 925 coordinator 320 of FIG. 3 may identify software 310 of FIG. 3 to process query 505 of FIG. 5, so that at block 715 of FIG. 7 query 505 of FIG. 5 may be processed by software 310 of FIG. 3.

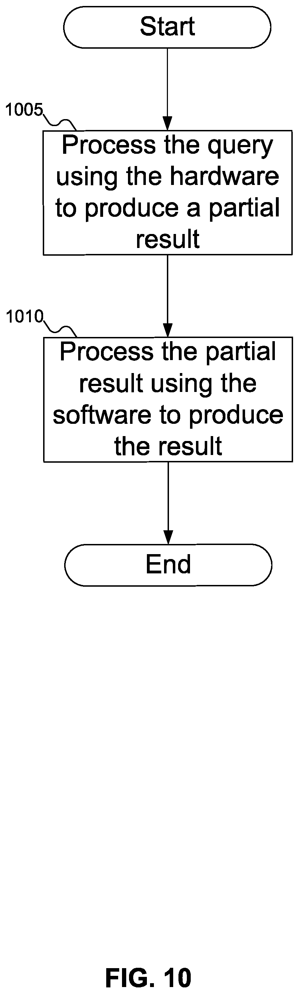

FIG. 10 shows a flowchart of an example procedure for processing query 505 of FIG. 5 using both hardware 305 of FIG. 3 and software 310 of FIG. 3 in accelerator 135 of FIG. 1, according to embodiments of the disclosure. In FIG. 10, at block 1005, hardware 305 of FIG. 3 may process query 505 of FIG. 5 to produce a partial result. At block 1010, software 310 of FIG. 3 may process the partial result produced by hardware 305 of FIG. 3 to produce the final result. Put another way, at block 1005, hardware 305 of FIG. 3 may process query 505 of FIG. 5 to the extent hardware 305 of FIG. 3 may handle, and at block 1010, software 310 of FIG. 3 may perform the rest of the processing of query 505 of FIG. 5 with reference to the results produced by hardware 305 of FIG. 3 in block 1005.

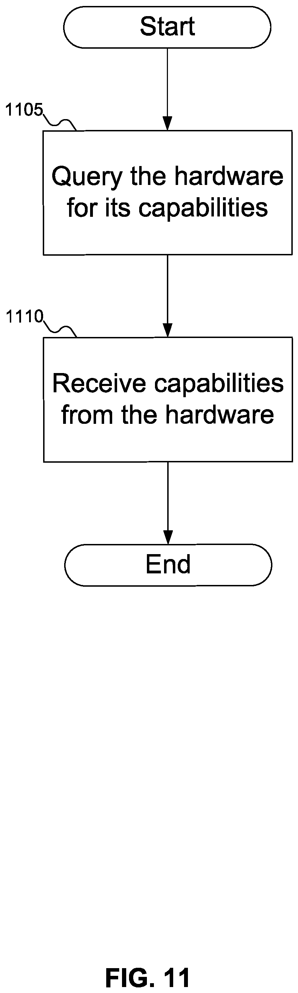

FIG. 11 shows a flowchart of an example procedure for coordinator 320 of FIG. 3 to query hardware 305 of FIG. 3 for its capabilities, according to embodiments of the disclosure. In FIG. 11, at block 1105, coordinator 320 of FIG. 3 may query hardware 305 of FIG. 3 for its capabilities. At block 1110, coordinator 320 of FIG. 3 may receive from hardware 305 of FIG. 3 its capabilities.

In FIGs. 7-11, some embodiments of the disclosure are shown. But a person skilled in the art will recognize that other embodiments of the disclosure are also possible, by changing the order of the blocks, by omitting blocks, or by including links not shown in the drawings. All such variations of the flowcharts are considered to be embodiments of the disclosure, whether expressly described or not.

Embodiments of the disclosure include an accelerator that may process a query using hardware and/or software. A coordinator may determine whether the hardware is capable of processing the query in whole or in part, and may coordinate whether the hardware, the software, or both may be used to process the query. By leveraging the use of both hardware and software in processing a query, a technical advantage of leveraging the hardware may be obtained while the software may be used in cases where the hardware is not capable of processing the query in whole or in part.

Embodiments of the disclosure include a hybrid database (DB) scan acceleration system architecture that may coordinate DB scan acceleration between software and hardware scan IPs. This system may be useful when hardware (HW) resources are insufficient to fully perform a DB scan acceleration using a HW accelerator. While the discussion below focuses on DB scan operations, embodiments of the disclosure may extend to other operations that may be similarly accelerated.

Embodiments of the disclosure may supplement HW acceleration, as HW acceleration may not support all possible cases due to the limited hardware resources and implementation cost. It may be complicated to support full operations (e.g., long string comparison, etc.) with a HW accelerator, and it may not be cost effective to add DB acceleration HW IPs to support full dataset operations (e.g., 1000 B string comparison). Instead, HW IPs may be implemented to support most use cases rather than full support even for rare cases, and use SW IPs to support the rare cases. Combining HW acceleration with software (SW) may provide improved results over HW acceleration alone in cases where the HW accelerator might not implement a complete DB scan.

Embodiments of the disclosure may use a coordinator to configure HW scan IP and SW scan IP modules to improve DB scan performance. If HW scan IPs are able to process the whole scan operations (e.g., string comparison), then all operations may be processed through HW scan IP modules. Otherwise, a partial DB scan may be processed through HW scan IP modules, and the remaining operations may be processed through SW scan IP modules by leveraging HW scan IP processing outputs. The coordinator may coordinate DB scan processing between hardware scan IPs and software scan IPs according to HW scan IP capabilities.

The following discussion is intended to provide a brief, general description of a suitable machine or machines in which certain aspects of the disclosure may be implemented. The machine or machines may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, a virtual machine, or a system of communicatively coupled machines, virtual machines, or devices operating together. Exemplary machines include computing devices such as personal computers, workstations, servers, portable computers, handheld devices, telephones, tablets, etc., as well as transportation devices, such as private or public transportation, e.g., automobiles, trains, cabs, etc.

The machine or machines may include embedded controllers, such as programmable or non-programmable logic devices or arrays, Application Specific Integrated Circuits (ASICs), embedded computers, smart cards, and the like. The machine or machines may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciate that network communication may utilize various wired and/or wireless short range or long range carriers and protocols, including radio frequency (RF), satellite, microwave, Institute of Electrical and Electronics Engineers (IEEE) 802.11, Bluetooth^{®}, optical, infrared, cable, laser, etc.

Embodiments of the present disclosure may be described by reference to or in conjunction with associated data including functions, procedures, data structures, application programs, etc. which when accessed by a machine results in the machine performing tasks or defining abstract data types or low-level hardware contexts. Associated data may be stored in, for example, the volatile and/or non-volatile memory, e.g., RAM, ROM, etc., or in other storage devices and their associated storage media, including hard-drives, floppy-disks, optical storage, tapes, flash memory, memory sticks, digital video disks, biological storage, etc. Associated data may be delivered over transmission environments, including the physical and/or logical network, in the form of packets, serial data, parallel data, propagated signals, etc., and may be used in a compressed or encrypted format. Associated data may be used in a distributed environment, and stored locally and/or remotely for machine access.

Embodiments of the disclosure may include a tangible, non-transitory machine-readable medium comprising instructions executable by one or more processors, the instructions comprising instructions to perform the elements of the disclosures as described herein.

The various operations of methods described above may be performed by any suitable means capable of performing the operations, such as various hardware and/or software component(s), circuits, and/or module(s). The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

## Claims

1. An accelerator (135), comprising:
a hardware (305) to process a query (505) received at the accelerator (135) on a database;
storage (325) for a software (310) to process the query on the database;
a processor (315) configured to execute the software (310); and
a coordinator (320) to determine whether the hardware (305), the software (310), or both may be used to process the query (505), and direct the hardware (305) and/or the software (310) to process the query (505) based at least in part on the query (505) and a determined capability of the hardware (305), wherein
the coordinator (320) is configured to query the hardware (305) to determine the capability of the hardware (305),
the accelerator (135) is configured to produce a result of the query (505) on the database,
and wherein the coordinator (320) is configured to instruct the hardware (305) to partially process the query (505) on the database to produce a partial result, and to instruct the software (310) to process the query (505) on the partial result to produce the result, based at least in part on the determined capability of the hardware (305),
wherein the query (505) involves a string, and the determined capability of the hardware (305) indicates a number of characters the hardware (305) is capable of processing,
wherein the hardware (305) partially processes the query by comparing a first portion of the string up to the number of characters to produce the partial result, the partial result including a false positive result,
and wherein the coordinator (320) informs the software (310) of the number of characters the hardware (305) was capable of processing,
such that the software (310) uses an offset corresponding to the number of characters to compare a remainder of the string to eliminate the false positive result.

2. The accelerator (135) according to claim 1, wherein the hardware (305) includes at least one of a field programmable gate array, FPGA, an application-specific integrated circuit, ASIC, a central processing unit, CPU, a graphics processing unit, GPU, a general purpose GPU, GPGPU, a tensor processing unit, TPU, or a data processing unit, DPU.

3. A method, comprising:
receiving (705) a query (505) at an accelerator (135), the accelerator (135) including a hardware (305) and a processor (315) configured to execute a software (310);
querying by a coordinator (320) of the accelerator (135) the hardware (305) to determine a capability of the hardware (305);
determining, by the coordinator (320), whether the hardware (305), the software (310), or both may be used to process the query (505), based at least in part on the query (505) and the determined capability of the hardware (305); and
processing (715) the query (505) on the database using the directed hardware (305) and/or the software (310) to produce a result;
wherein processing the query includes instructing the hardware (305) to partially process the query (505) on the database to produce a partial result, and instructing the software (310) to process the query (505) on the partial result to produce the result, based at least in part on the determined capability of the hardware (305),
wherein the query (505) involves a string, and the determined capability of the hardware (305) indicates a number of characters the hardware (305) is capable of processing,
wherein partially processing the query by the hardware (305) includes comparing a first portion of the string up to the number of characters to produce the partial result, the partial result including a false positive result,
and wherein the coordinator (320) informs the software (310) of the number of characters the hardware (305) was capable of processing, such that the software (310) uses an offset corresponding to the number of characters to compare a remainder of the string to eliminate the false positive result.

4. The method according to claim 3, wherein identifying (710) at least one of the hardware (305) of the accelerator (135) and the software (310) of the accelerator (135) to process the query (505) on the database based at least in part on the query (505) includes:
determining that the hardware (305) is configured to produce the result; and
identifying the hardware (305) to process the query (505) on the database.

5. The method according to claim 3, wherein identifying (710) at least one of the hardware (305) of the accelerator (135) and the software (310) of the accelerator (135) to process the query on the database based at least in part on the query includes:
determining that the hardware (305) is not configured to produce the result; and
identifying the software (310) to process the query on the database.

6. The method according to claim 3, wherein identifying (710) at least one of the hardware (305) of the accelerator (135) and the software (310) of the accelerator (135) to process the query on the database based at least in part on the query includes:
determining that the hardware (305) is configured to produce the partial result; and
identifying the hardware (305) and the software (310) to process the query on the database.

7. The method according to claim 3, further comprising receiving at the coordinator (320) the capability of the hardware (305).

## Patentansprüche

1. Beschleuniger (135), aufweisend:
eine Hardware (305) zum Verarbeiten einer an dem Beschleuniger (135) empfangenen Abfrage (505) in einer Datenbank;
einen Speicher (325) für eine Software (310) zum Verarbeiten der Abfrage in der Datenbank;
einen Prozessor (315), der zur Ausführung der Software (310) konfiguriert ist; und
einen Koordinator (320) zum Bestimmen, ob die Hardware (305), die Software (310) oder beide zur Verarbeitung der Abfrage (505) verwendet werden können, und zum Anleiten der Hardware (305) und/oder der Software (310), die Abfrage (505) zumindest teilweise auf der Grundlage der Abfrage (505) und einer ermittelten Leistungsfähigkeit der Hardware (305) zu verarbeiten, wobei
der Koordinator (320) so konfiguriert ist, dass er die Hardware (305) abfragt, um die Leistungsfähigkeit der Hardware (305) zu bestimmen,
der Beschleuniger (135) so konfiguriert ist, dass er ein Ergebnis der Abfrage (505) in der Datenbank erzeugt,
und wobei der Koordinator (320) so konfiguriert ist, dass er die Hardware (305) anweist, die Abfrage (505) in der Datenbank teilweise zu verarbeiten, um ein Teilergebnis zu erzeugen, und die Software (310) anweist, die Abfrage (505) auf der Grundlage des Teilergebnisses zu verarbeiten, um das Ergebnis zu erzeugen, dies basierend zumindest teilweise auf der bestimmten Leistungsfähigkeit der Hardware (305),
wobei die Abfrage (505) eine Zeichenkette umfasst und die bestimmte Leistungsfähigkeit der Hardware (305) eine Anzahl von Zeichen angibt, die die Hardware (305) verarbeiten kann,
wobei die Hardware (305) die Abfrage teilweise verarbeitet, indem sie einen ersten Abschnitt der Zeichenkette bis zu der Anzahl von Zeichen vergleicht, um das Teilergebnis zu erzeugen, wobei das Teilergebnis ein falsch-positives Ergebnis enthält,
und wobei der Koordinator (320) die Software (310) über die Anzahl der Zeichen informiert, die die Hardware (305) verarbeiten konnte,
sodass die Software (310) einen der Anzahl der Zeichen entsprechenden Versatz verwendet, um einen Rest der Zeichenkette zu vergleichen und das falsch-positive Ergebnis zu beseitigen.

2. Beschleuniger (135) nach Anspruch 1, wobei die Hardware (305) mindestens eine/s von einem feldprogrammierbaren Gate-Array, FPGA, einer anwendungsspezifischen integrierten Schaltung, ASIC, einer zentralen Verarbeitungseinheit, CPU, einer Graphikverarbeitungseinheit, GPU, einer Allzweck-GPU, GPGPU, einer Tensor-Verarbeitungseinheit, TPU, oder einer Datenverarbeitungseinheit, DPU, beinhaltet.

3. Verfahren, umfassend:
Empfangen (705) einer Abfrage (505) an einem Beschleuniger (135), wobei der Beschleuniger (135) eine Hardware (305) und einen Prozessor (315) beinhaltet, die zum Ausführen einer Software (310) konfiguriert sind;
Abfragen der Hardware (305) durch einen Koordinator (320) des Beschleunigers (135), um eine Leistungsfähigkeit der Hardware (305) zu bestimmen;
Bestimmen, durch den Koordinator (320), ob die Hardware (305), die Software (310) oder beide zum Verarbeiten der Abfrage (505) verwendet werden können, zumindest teilweise basierend auf der Abfrage (505) und der bestimmten Leistungsfähigkeit der Hardware (305); und
Verarbeiten (715) der Abfrage (505) in der Datenbank unter Verwendung der angeleiteten Hardware (305) und/oder der angeleiteten Software (310), ein Ergebnis zu erzeugen;
wobei das Verarbeiten der Abfrage das Anweisen der Hardware (305) beinhaltet, die Abfrage (505) in der Datenbank teilweise zu verarbeiten, um ein Teilergebnis zu erzeugen, sowie das Anweisen der Software (310), die Abfrage (505) auf der Grundlage des Teilergebnisses zu verarbeiten, um das Ergebnis zu erzeugen, dies zumindest teilweise auf der bestimmten Leistungsfähigkeit der Hardware (305),
wobei die Abfrage (505) eine Zeichenkette umfasst und die bestimmte Leistungsfähigkeit der Hardware (305) eine Anzahl von Zeichen angibt, die die Hardware (305) verarbeiten kann,
wobei die teilweise Verarbeitung der Abfrage durch die Hardware (305) ein Vergleichen eines ersten Abschnitts der Zeichenkette bis zu der Anzahl von Zeichen umfasst, um das Teilergebnis zu erzeugen, wobei das Teilergebnis ein falsch-positives Ergebnis umfasst,
und wobei der Koordinator (320) die Software (310) über die Anzahl von Zeichen informiert, die die Hardware (305) verarbeiten konnte, sodass die Software (310) einen der Anzahl der Zeichen entsprechenden Versatz verwendet, um einen Rest der Zeichenkette zu vergleichen und das falsch-positive Ergebnis zu beseitigen.

4. Verfahren nach Anspruch 3, wobei das Identifizieren (710) der Hardware (305) des Beschleunigers (135) und/oder der Software (310) des Beschleunigers (135) zum Verarbeiten der Abfrage (505) in der Datenbank, zumindest teilweise basierend auf der Abfrage (505), umfasst:
Bestimmen, dass die Hardware (305) dazu konfiguriert ist, das Ergebnis zu erzeugen; und
Identifizieren der Hardware (305) zum Verarbeiten der Abfrage (505) in der Datenbank.

5. Verfahren nach Anspruch 3, wobei das Identifizieren (710) der Hardware (305) des Beschleunigers (135) und/oder der Software (310) des Beschleunigers (135) zum Verarbeiten der Abfrage in der Datenbank, zumindest teilweise basierend auf der Abfrage, umfasst:
Bestimmen, dass die Hardware (305) nicht dazu konfiguriert ist, das Ergebnis zu erzeugen; und
Identifizieren der Software (310) zum Verarbeiten der Abfrage in der Datenbank.

6. Verfahren nach Anspruch 3, wobei das Identifizieren (710) der Hardware (305) des Beschleunigers (135) und/oder der Software (310) des Beschleunigers (135) zum Verarbeiten der Abfrage in der Datenbank, zumindest teilweise basierend auf der Abfrage, umfasst:
Bestimmen, dass die Hardware (305) dazu konfiguriert ist, das Teilergebnis zu erzeugen; und
Identifizieren der Hardware (305) und der Software (310) zum Verarbeiten der Abfrage in der Datenbank.

7. Verfahren nach Anspruch 3, ferner umfassend das Empfangen der Leistungsfähigkeit der Hardware (305) an dem Koordinator (320).

## Revendications

1. Accélérateur (135), comprenant :
un élément matériel (305) destiné à traiter une requête (505) sur une base de données, ladite requête étant reçue au niveau de l'accélérateur (135) ;
un dispositif de stockage (325) pour un logiciel (310) destiné à traiter la requête sur la base de données ;
un processeur (315) configuré pour exécuter le logiciel (310) ; et
un coordinateur (320) destiné à déterminer si l'élément matériel (305), le logiciel (310) ou les deux peuvent être utilisés pour traiter la requête (505), et à commander, au moins en partie en fonction de la requête (505) et d'une capacité déterminée de l'élément matériel (305), à l'élément matériel (305) et/ou au logiciel (310) de traiter la requête (505),
dans lequel le coordinateur (320) est configuré pour interroger l'élément matériel (305) afin de déterminer la capacité de l'élément matériel (305),
dans lequel l'accélérateur (135) est configuré pour produire un résultat de la requête (505) sur la base de données,
et dans lequel le coordinateur (320) est configuré pour donner, au moins en partie en fonction de la capacité déterminée de l'élément matériel (305), à l'élément matériel (305) l'instruction de traiter partiellement la requête (505) sur la base de données afin de produire un résultat partiel, et au logiciel (310) l'instruction de traiter la requête (505) sur le résultat partiel afin de produire le résultat,
dans lequel la requête (505) fait intervenir une chaîne de caractères, et la capacité déterminée de l'élément matériel (305) indique un nombre de caractères que l'élément matériel (305) est capable de traiter,
dans lequel l'élément matériel (305) traite partiellement la requête en comparant une première partie de la chaîne de caractères jusqu'à concurrence dudit nombre de caractères afin de produire le résultat partiel, le résultat partiel comprenant un résultat faussement positif,
et dans lequel le coordinateur (320) communique au logiciel (310) le nombre de caractères que l'élément matériel (305) était capable de traiter,
de sorte que le logiciel (310) utilise un décalage correspondant audit nombre de caractères pour comparer une partie restante de la chaîne de caractères afin d'éliminer le résultat faussement positif.

2. Accélérateur (135) selon la revendication 1, dans lequel l'élément matériel (305) comprend au moins l'un des éléments suivants : un réseau de portes programmables, FPGA, un circuit intégré à application spécifique, ASIC, une unité centrale de traitement, CPU, une unité de traitement graphique, GPU, une unité de traitement graphique à usage général, GPGPU, une unité de traitement tensoriel, TPU, ou une unité de traitement de données DPU.

3. Procédé, comprenant :
la réception (705), au niveau d'un accélérateur (135), d'une requête (505), l'accélérateur (135) comprenant un élément matériel (305) et un processeur (315) configuré pour exécuter un logiciel (310) ;
l'interrogation, par un coordinateur (320) de l'accélérateur (135), de l'élément matériel (305) afin de déterminer une capacité de l'élément matériel (305) ;
la détermination, par le coordinateur (320), au moins en partie en fonction de la requête (505) et de la capacité déterminée de l'élément matériel (305), de la possibilité d'utiliser l'élément matériel (305), le logiciel (310) ou les deux pour traiter la requête (505) ; et
le traitement (715) de la requête (505) sur la base de données au moyen de l'élément matériel (305) commandé et/ou du logiciel (310), afin de produire un résultat ;
dans lequel le traitement de la requête comprend le fait de donner, au moins en partie en fonction de la capacité déterminée de l'élément matériel (305), à l'élément matériel (305) l'instruction de traiter partiellement la requête (505) sur la base de données afin de produire un résultat partiel, et au logiciel (310) l'instruction de traiter la requête (505) sur le résultat partiel afin de produire le résultat,
dans lequel la requête (505) fait intervenir une chaîne de caractères, et la capacité déterminée de l'élément matériel (305) indique un nombre de caractères que l'élément matériel (305) est capable de traiter,
dans lequel le traitement partiel de la requête par l'élément matériel (305) comprend la comparaison d'une première partie de la chaîne de caractères jusqu'à concurrence dudit nombre de caractères afin de produire le résultat partiel, le résultat partiel comprenant un résultat faussement positif,
et dans lequel le coordinateur (320) communique au logiciel (310) le nombre de caractères que l'élément matériel (305) était capable de traiter, de sorte que le logiciel (310) utilise un décalage correspondant audit nombre de caractères pour comparer une partie restante de la chaîne de caractères afin d'éliminer le résultat faussement positif.

4. Procédé selon la revendication 3, dans lequel l'identification (710), au moins en partie en fonction de la requête (505), de l'élément matériel (305) de l'accélérateur (135), du logiciel (310) de l'accélérateur (135) ou des deux, en vue de traiter la requête (505) sur la base de données, comprend :
la détermination du fait que l'élément matériel (305) est configuré pour produire le résultat ; et
l'identification de l'élément matériel (305) en vue de traiter la requête (505) sur la base de données.

5. Procédé selon la revendication 3, dans lequel l'identification (710), au moins en partie en fonction de la requête, de l'élément matériel (305) de l'accélérateur (135), du logiciel (310) de l'accélérateur (135) ou des deux, en vue de traiter la requête sur la base de données, comprend :
la détermination du fait que l'élément matériel (305) n'est pas configuré pour produire le résultat ; et
l'identification du logiciel (310) en vue de traiter la requête sur la base de données.

6. Procédé selon la revendication 3, dans lequel l'identification (710), au moins en partie en fonction de la requête, de l'élément matériel (305) de l'accélérateur (135), du logiciel (310) de l'accélérateur (135) ou des deux, en vue de traiter la requête sur la base de données, comprend :
la détermination du fait que l'élément matériel (305) est configuré pour produire le résultat partiel ; et
l'identification de l'élément matériel (305) et du logiciel (310) en vue de traiter la requête sur la base de données.

7. Procédé selon la revendication 3, comprenant en outre la réception, par le coordinateur (320), de la capacité de l'élément matériel (305).
